# EUROPÄISCHE PATENTSCHRIFT

(11) **EP 1 336 054 B1**
(45) Veröffentlichungstag und Bekanntmachung des Hinweises auf die Patenterteilung: **03.09.2008**
(21) Anmeldenummer: 01993776.2
(22) Anmeldetag: 02.11.2001
(51) Int. Cl.: F16D 65/12

(54) **BREMSSCHEIBE UND VERFAHREN ZU DEREN HERSTELLUNG**
BRAKE DISK AND METHOD FOR THE PRODUCTION THEREOF
DISQUE DE FREIN ET SON PROCEDE DE FABRICATION

(30) Priorität: 13.11.2000 DE 10056161
(43) Veröffentlichungstag der Anmeldung: 20.08.2003
(73) Patentinhaber: KNORR-BREMSE SYSTEME FÜR NUTZFAHRZEUGE GMBH, 80809 München (DE)
(72) Erfinder: KHAMBEKAR, Suryakant, 80997 München (DE); BAUMGARTNER, Hans, 85368 Moosburg (DE); PAHLE, Wolfgang, 74080 Heilbronn (DE)
(86) Internationale Anmeldenummer: PCT/EP2001/012719
(87) Internationale Veröffentlichungsnummer: WO 2002/038978

(56) Entgegenhaltungen:
- EP-A- 0 525 439
- WO-A-89/09889
- DE-A- 2 602 335
- DE-A- 4 321 713
- DE-A- 19 747 111
- DE-C- 843 634
- DE-U- 29 617 774
- US-A- 5 884 388

## Beschreibung

Die Erfindung betrifft eine Bremsscheibe mit axialen Reibflächen nach dem Oberbegriff des Anspruch und ein Verfahren zu deren Herstellung nach dem Oberbegriff des Anspruches 27.

Eine Bremsscheibe ist aus der DE G 298 13 236 bekannt. Die in dieser Schrift dargestellte Bremsscheibe ist insbesondere gut für die bei Nutzfahrzeugen auftretenden hohen Belastungen geeignet und hat sich auch als verschleißresistent bewährt. Im Alltagseinsatz sind Lebensdauern im LKW von 300.000 km oder mehr keine Seltenheit. Dennoch besteht grundsätzlich der Bedarf nach einer weiteren Erhöhung der Verschleißresistenz, wobei die Herstellkosten der Bremsscheibe wirtschaftlich vertretbar bleiben sollen.

Zwar wird in neuerer Zeit-der Einsatz von Keramikbremsscheiben diskutiert, welche im Bereich der Sportwagen auch bereits in Kleinserien eingebaut werden. Die Herstellkosten derartiger Bremsscheiben liegen jedoch im Bereich mehrerer tausend DM. Insbesondere im Bereich der Nutzfahrzeuge erscheint der Einsatz derartiger Bremsscheiben daher unwirtschaftlich. Es besteht vielmehr der Bedarf nach einer deutlichen Erhöhung der Verschleißresistenz bei vertretbar bleibenden Herstellkosten der Bremsscheibe.

Allerdings ist es nicht einfach möglich, die Verschleißresistenz der Bremsscheibe allein durch eine Erhöhung der Härte des Bremsscheibenmaterials zu erhöhen, da die Bremsscheibe nicht nur verschleißresistent sein soll sondern auch weiteren Randbedingungen zu genügen hat.

Mit den legierten Graugußsorten der DE G 298 13 236 konnten insbesondere bereits die Anforderungen an die Wärmerißbeständigkeit bei gleichzeitig guter Wärmeabfuhr aus der Bremsscheibe und damit hoher Leistungsfähigkeit verbessert werden. Bei diesen Materialien ist auch das Verschleißverhalten durch die Ausbildung von Sekundärkarbiden im Gefüge gegenüber üblichen Bremsscheiben aus Grauguß verbessert. Diese Anforderungen werden von Graugußwerkstoffen für die meisten Anforderungen im Fahrzeugbau zufriedenstellend erfüllt. Dennoch besteht der Bedarf nach einer nochmals deutlichen Erhöhung der Verschleißresistenz der Bremsscheibe. Eine derartige Erhöhung der Verschleißresistenz kann aber nicht einfach dadurch erreicht werden, daß die Härte des Graugusses durch Variation der Legierungszusätze erhöht wird, denn mit zunehmender Härte verschlechtern sich u.U. andere Eigenschaften der Bremsscheibe wie deren Neigung zur Rißbildung oder deren Wärmeleitfähigkeit. Bei extremer Beanspruchung können auch Bremsscheiben mit verbesserter Gestaltung und Materialauswahl noch eine unzulässige Wärmerißbildung aufweisen. Ein weiteres verbleibendes Problem von Bremsscheiben aus Graugußwerkstoffen ist eine unter bestimmten Betriebsbedingungen auftretende Ungleichförmigkeit des Bremsmomentes (Bremsenrubbeln).

Bremsscheibenwerkstoffe müssen also sehr unterschiedlichen Anforderungen gerecht werden, die z.T. gegensätzliche Werkstoffeigenschaften erfordern.

So dienen sie der Übertragung des Bremsmomentes. Hierzu sollten sie eine hohe Festigkeit, eine hohe Bruchdehnbarkeit und ein hohes E-Modul aufweisen.

Aufgrund der bei Bremsungen auftretenden Wärme sollten sie ferner eine hohe bzw. gute Wärmeabfuhr erlauben. Hierzu sollen sie eine hohewärmeleitfähigkeit und einen hohen Emissionsgrad aufweisen.

Zu fordern ist ferner eine hohe Wärmerißbeständigkeit. Hierzu sollten die Bremsscheiben eine hohe Wärmeleitfähigkeit, einen niedrigen E-Modul und eine niedrige Wärmedehnung aufweisen.

Wünschenswert ist ferner ein geringer Verschleiß der Scheibenbremse. Hierzu sind eine hohe Harte, eine hohe Zähigkeit und eine hohe Oxidationsbeständigkeit vorteilhaft.

In Hinsicht auf möglichst gleichmäßige Reibeigenschaften wird ferner eine hohe Homogenität des Materials auch bei starker Wärmebeanspruchung sowie die Vermeidung von Wanddickenschwankungen durch ungleichen Verschleiß gefordert.

Wünschenswert sind ferner wie bei allein ungefederten Massen an der Fahrzeugachse ein möglichst niedriges Gewicht und möglichst niedrige Herstellkosten.

Der bei der eingangsgenannten Bremsscheibe der DEG29813236 eingesetzte Grauguß-insbesondere mit einem C-Gehalt von 3,8 bis 4%, einem Mo-Gehalt zwischen 0,6 und 0,8% und vorzugsweise einem Cr-Gehalt von 0,2 - 0,3% sowie vorzugsweise weiteren Zusätzen wie Mn, P, S, Cu und/oder Ni-ist bei relativ niedrigen Herstellkosten bereits gut verschleißresisten.

Aus der gattungsgemäßenDE 29617774 U1 ist eine Bremsscheibe für Kraftfahrzeuge bekannt, deren Reibflächen eine Beschichtung aus einer Chromcarbidschicht aufweisen, die im thermischen Spritzverfahren aufgebracht ist.

Wünschenswert wäre im Bereich der Nutzfahrzeuge, wo ein Scheibenwechsel relativ aufwendig sein kann, aber insbesondere eine derartige Erhöhung der Verschleißresistenz, daß während der Lebensdauer des Fahrzeuges auf einen Scheibenwechsel verzichtet werden kann. In diesem Fall könnten sich durchaus auch die Bremsscheibenkosten erhöhen, allerdings nur derart, daß gegenüber einem Scheibenwechsel noch ein wirtschaftlicher Vorteil verbleibt.

Die Erfindung setzt angesichts der Probleme bei der Aufgabe an, eine Bremsscheibe, vorzugsweise eine Graugußbrernsscheibe, zu schaffen, welche bei einfacher Herstellbarkeit möglichst verschleißresistent ist. Vorzugsweise sollen dabei die übrigen Eigenschaften der Bremsscheibe gegenüber dem gattungsgemäßen Stand der Technik möglichst wenig verschlechtert werden. Geschaffen werden soll ferner ein vorteilhaftes Herstellverfahren für die erfindungsgemaßen Bremsscheiben.

Diese Aufgabe löst die Erfindung in Hinsicht auf die Bremsscheibe durch den Gegenstand des Anspruches 1 und in Hinsicht auf das Verfahren durch den Gegenstand des Anspruches 27.

Da die angegebene Beschichtung eingesetzt wird, wird die Haftung der Beschichtung gegenüber Bremsscheiben mit keramischen Beschichtungen auf einfache Weise optimiert. Diese Bremsscheibe eignet sich besonders für LKW, ist aber auch bei PKW einsetzbar.

Zwar sind verschleißschützende Beschichtungen auf die Reibflächen von Bremsscheiben an sich bekannt (EP 0 674 114 B1). Diese Beschichtungen auf keramischer Basis weisen günstige Verschleißeigenschaften auf sind aber wegen der unterschiedlichen Eigenschaften zum Grundmaterial auf Graugußbremsscheiben und aufgrund der bei der Beschichtung auftretenden Thermoschockbeanspruchung Haftungsprobleme problematisch.

Die Erfindung schafft dagegen auf einfache Weise eine kostengünstige, verschleißschützende Beschichtung von Bremsscheiben, welche mit Bremsscheibenmaterialien aus Eisengußwerkstoffen - insbesondere Graugußmaterialien - kompatibel ist, wobei es möglich ist, unter Beibehaltung der günstigen Eigenschaften dieser für die Anwendung in Bremsscheiben optimierten Werkstoffe die Verschleißlebensdauer so zu steigern; daß die Bremsscheiben nur noch sehr viel seltener, so z.B. in selten auftretenden, besonders verschleißintensiven Anwendungen wegen Erreichen des Verschleißgrenzmaßes ausgetauscht werden müssen.

Die Beschichtung erlaubt ferner eine Reduzierung der Wärmerißbildung der Bremsscheibe, wobei auch der Effekt des Bremsenrubbeln infolge von im Betrieb entstandenen Dickenschwankungen der Bremsscheibe vermeidbar wird.

Thermische Spritzbeschichtungsverfahren sind an sich bekannt, so z.B. bei der Beschichtung von Kolbenringen (siehe z.B. K. Kinder, Auftragen von Schutzschichten auf technische Teile mit Hilfe thermischer Spritzverfahren; aus: Kunst et al "Verschleißhemmende Schichten" Band 436, Kontakt & Studium, Werkstoffe, Expert Verlag). Ihr Einsatz im Bereich der Beschichtungen von Biemsscheiben zur Herstellung einer metallischen Bremsscheibenbeschichtung wurde bisher jedoch nicht Erwägung gezogen, da man glaubte, daß die metallischen Spritzgußbeschichtungen die sonstigen gewünschten Eigenschaften des Eisenwerkstoffkemes verschlechtern würden.

Bei der Anwendung derartiger thermischer Spritzschichten auf Graugußbremsscheiben ergab sich nun aber die überraschende Erkenntnis, daß diese thermischen Spritzschichten aufgrund der auftretenden metallurgischen Reaktion mit dem Material der Bremsscheibe sowie dem durch die hohe Wärmespeicherkapazität der Bremsscheibe beeinflußten Erstarrungsverlauf der Spritzschicht nicht nur das Verschleißverhalten der Bremsscheibe selbst bei hohen Temperaturen unerwartet positiv beeinflussen sondern auch die Wärmerißbildung und Bremsmomentschwankungen reduzieren.

Alternative Herstellverfahren zum bevorzugten und bewährten Lichtbogenspritzen sind das Flammspritzen, das Plasmaspritzen und das Explosionsbeschichten.

Die Erfindung schafft somit eine Schutzschicht für Bremsscheiben aus Eisengußwerkstoffen, die durch thermisches Spritzen auf die Reibflächen der Bremsscheibe aufgebracht wird, wobei das aufgespritzte Material ein Metall ist. Insbesondere wird das aufgespritzte Material so gewählt, daß neben dem Verschleißschutz auch ein Schutz gegen Oxydation und gegen unerwünschte metallurgische Veränderungen der Reibfläche erzielt wird.

Vorzugsweise besteht die Spritzgußbeschichtung aus einem härteren Metall als der Kern, insbesondere einem unlegierten oder legierten Stahl. Vorzugsweise besteht die Spritzgußbeschichtung aus einer Cr enthaltenden Stahllegierung. Insbesondere liegt der Cr-Gehalt der Beschichtung zwischen 10 und 20 %, zwischen 13 und 19 %, zwischen 15 und 17 % oder besonders bevorzugt bei 16%.

Ganz besonders bewährt hat sich eine Bremsscheibe, bei der der die Beschichtung bildende legierte Stahl folgende Zusätze enthält: 16%Cr , 0,44%Ni, 0,43%Mn , 0,01%Mo , und 0,36%C.

Bewährt hat sich ferner, daß der Kern aus einem kostengünstigen Grauguß besteht. Vorzugsweise ist der der den Kern bildende Grauguß ein hochgekohlter Grauguß, der einen Kohlenstoffgehalt von 3,7 - 4,0 % aufweist und Mo und/oder Cr enthält. Insbesondere liegt der Mo-Gehalt des Kernes bei 6-8% und der Cr-Gehalt bei weniger als 5%.

Bewährt haben sich ferner axiale Beschichtungsdicken von 0,3 bis 1,5 mm, vorzugsweise 0,5 - 1, 2 mm, insbesondere 0,6 - 0, 9 mm. Mit einer Beschichtungsdicke von 0, 7 mm läßt sich bei Einsatz einer Spritzgußbeschichtung mit hohem Cr-Gehalt oftmals eine Verdopplung der Lebensdauer der Bremsscheibe erreichen.

Einsetzbar ist die Erfindung bevorzugt bei Nutzfahrzeugbremsscheiben mit einer Scheibendicke von 38 bis 45mm und einer Luftkanalbreite von 12 mm.

Vorzugsweise erfüllt das Verhältnis zwischen Scheibendicke D1 und Luftkanalbreite D die Bedingung 3,2<= D1/D2 <= 4.

Bevorzugt sind im Übergangsbereich zwischen dem Kern und der Spritzgußbeschichtung wechselseitig ineinandergreifende Konturen, vorzugsweise Nuten-und/oder eine Noppenstruktur ausgebildet.

Zweckmäßig weisen die Reibringe am inneren und/oder äußeren Umfangsrand mindestens einen axialen Bund auf, dessen Höhe vorzugsweise der axialen Erstreckung der Beschichtung entspricht.

Nachfolgend werden Ausführungsbeispiele der Erfindung unter Bezug auf die Zeichnung näher beschrieben. Es zeigt:
- Figur 1: einen Schnitt ein erstes Ausführungsbeispiel einer erfindungsgemäßen Bremsscheibe;
- Figur 2: einen Schnitt durch den Bereich der Reibringe eines weiteren Ausführungsbeispiels einer erfindungsgemäßen Bremsscheibe;
- Figur 3 und 4: in einer Vergrößerung etwa 1.000 : 1 die Ausbildung und Verteilung von die Verschleißfestigkeit steigernden Hartstoffen, welche durch Ätzen als helle Flecken kenntlich gemacht sind;
- Figur 5: ein Schliffbild einer Beschichtung in Vergrößerung etwa 500 : 1.

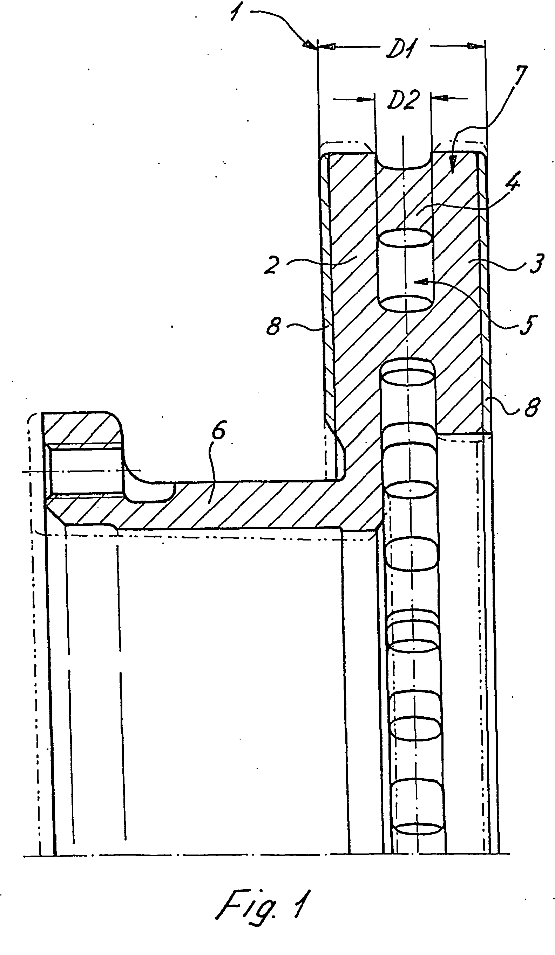

Fig. 1 zeigt eine Bremsscheibe 1, die zwei Reibringe 2, 3 aufweist, welche über Stege 4 einstückig miteinander verbunden sind, wobei zwischen den Reibringen 2, 3 sowie den Stegen ein Lüftkanal 5 ausgebildet wird. An den einen Reibring 2 ist an topfartiger Ansatz 6 zur Befestigung der Bremsscheibe an einer hier nicht gezeigten Radnabe dargestellt.

Die beiden Reibringe 2, 3 sowie die Stege (und hier auch der Ansatz 6) bilden zusammen einen einstückigen Bremsscheibenkörper bzw. einen Kern 7. Dieser ist an seinen beiden axialen Außenflächen jeweils mit einer verschleißresistenten metallischen, nichtkermaischen Spritzgußbeschichtung 8 versehen. Nach Fig. 1 sind die vollständigen axialen Außenflächen mit der Spritzgußbeschichtung überzogen.

Bei Bremsungen wird also bis zum vollständigen Verschleiß der Spritzgußbeschichtung 8 lediglich diese als Reibfläche dem bei Bremsungen auftretenden Abrieb ausgesetzt. Da die metallische Spritzgußbeschichtung härter ist als der Kern 7 aus Grauguß, wird die Lebensdauer der Bremsscheibe erhöht. Da aber der wesentliche Volumenanteil der Bremsscheibe, nämlich der Kern 7, aus Grauguß besteht, bleiben dessen vorteilhaße weitere Eigenschaften z.B. hinsichtlich der Wärmeleitfähigkeit und der Neigung zur Rißbildung erhalten oder werden sogar durch das Auftragen der Spritzgußbeschichtung verbessert.

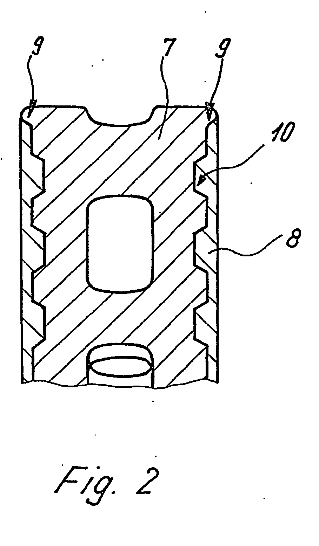

Nach Fig. 2 ist es alternativ denkbar, im äußeren und/oder inneren Umfangsbereich eine Art axialen Bund 9 an den Kern 7 anzuformen, dessen axiale Erstreckung hier der axialen Erstreckung der Beschichtung 8 entspricht. Ist sowohl am inneren sowie am äußeren Rand der Reibflächen jeweils ein axialer Bund 9 ausgebildet, entsteht zwischen den beiden Bünden 9 eine Art Vertiefung zu Aufnahme der Beschichtung 8 (hier nicht dargestellt).

Nach Fig. 2 ist es ferner vorgesehen, zwischen der Beschichtung 8 und dem Kern 7 keine ebene Grenzfläche sondern eine räumliche Oberflächenstruktur auszubilden, bei welcher die Spritzgußbeschichtung 8 und der Kern 7 axial ineinandergreifen.

Diese Struktur entsteht dadurch, daß in den axialen Außenflächen des Kernes 7 trapezförmige Nuten 10 ausgebildet sind, welche die Beschichtung 8 ausfüllt, wobei die Beschichtung 8 axial so dick ausgebildet ist, daß sie sich axial über die Nuten hinaus erstreckt. Hierdurch wird axial außerhalb der Nuten 10 ein flächiger Beschichtungsbereich ausgebildet, welcher bis auf den Bereich der Bünde 9 die axialen Außenflächen der Bremsscheibe abdeckt.

Das Ausbilden einer räumlichen, in Fig. 2 lediglich beispielhaft dargestellten Struktur im Grenzbereich zwischen der Beschichtung 8 und dem Kern 7 hat mehrere Vorteile. So wird vermieden, daß nach dem Abrieb der vollständigen Spritzgußbeschichtung 8 ein abrupter Übergang zum Graugußmaterial und damit ein relativ abrupter Übergang einem anderen Bremsverhalten erfolgt. Darüber hinaus wird die Haftung der Spritzgußbeschichtung 8 auf den Reibringen verbessert, u.a., da die Kontaktfläche zwischen der Beschichtung 8 und dem Kern bzw. den Reibringen 2, 3 vergrößert wird.

Im Übergangsbereich zwischen dem Kern 7 und der Spritzgußbeschichtung 8 sind verschiedenste Geometrien realisierbar, so z.B. wechselseitig ineinandergreifende Trapez- oder Rechteckformen oder aber beispielsweise eine Noppenstruktur auf der Oberfläche der Reibringe 2, 3 welche von der Spritzgußbeschichtung 8 abgedeckt wird.

Nachfolgend werden weitere Details der Herstellung einer erfindungsgemäßen Bremsscheibe beschrieben.

Besonders bewährt hat sich im Rahmen der Erfindung zur Herstellung der Spritzgußbeschichtung auf der Bremsscheibe das Verfahren des Lichtbogenspritzens. Dabei wird das aus einem Lichtbogen, in dem eine Temperatur von bis zu 4000 °C herrscht, mittels eines Zerstäubergases, im einfachsten Fall Druckluft, auf die Oberfläche der Bremsscheibe 1 bei gleichzeitiger Fortbewegung derselben in dünnen Schichten aufgebracht. Z.B. werden auf die Reibflächen einer Bremsscheibe 1 von 430 mm Durchmesser und einem Gewicht von ca. 25 kg pro Seite etwa 250 bis 450 Gramm Beschichtungswerkstoff aufgespritzt.

Aufgrund der hohen Masse der Bremsscheibe 1 in Verbindung mit der hohen Wärmeleitfähigkeit des Bremsscheibenmaterials kommt es nach dem Auftreffen der Spritztropfen auf die Bremsscheibe 1 nach kurzer metallurgischer Reaktion mit dem Bremsscheibenmaterial zu einem extrem schnellen Erstarren und Abkühlen des aufgespritzten Materials. Als Folge ergibt sich eine z.T. unterdrückte Gefügeausbildung in der Spritzbeschichtung 8 die gegenüber dem Normalgefüge des gleichen Materials erheblich verbesserte mechanische und Verschleiß - Eigenschaften zur Folge hat.

Als Basiswerkstoff wird bevorzugt ein Eisenwerkstoff, vorzugsweise ein Graugußmaterial eingesetzt, wobei u.a. auch andere Gußmaterialen prinzipiell denkbar sind.

Graugußbremsscheiben weisen in der Regel einen Kohlenstoffgehalt im Bereich von einigen (z.B. 3-4) Gewichtsprozent auf. Insbesondere die in der DE G 298 13 236 Graugußmaterialien sind zur Erzielung höchstmöglicher Wärmeleitfähigkeit bis an die Sättigungsgrenze aufgekohlt. Hier werden Kohlenstoffgehalte von 3,7 bis 4,0 Gewichtsprozent realisiert. Die aus dem Lichtbogen ausgeblasenen Metalltropfen reagieren beim Auftreffen auf die Bremsscheibe mit Bestandteilen des Bremsscheibenmaterials, insbesondere mit dem hohen Anteil vorhandenen Kohlenstoffes, und bilden dabei harte Metall - Kohlenstoffverbindung. Ein weiteres bevorzugtes Beschichtungsmaterial nach Werkstoff Nr. 1.4122 hat z.B. in einer Analyse folgende Zusammensetzung (Gewichts Prozent):
- 16% Cr ,
- 0,44% Ni,
- 0,43% Mn ,
- 1.01% Mo,
- 0,36% C

Der hohe Chromanteil bildet in Verbindung mit den anderen Legierungszusätzen sowie dem Kohlenstoff Chromkarbid aus, durch welches die Verschleißfestigkeit der Spritzschicht gesteigert wird.

Die Bildung von Wärmerissen in der Bremsscheibenreibfläche wird durch folgenden Mechanismus bewirkt. Während des Bremsvorganges wird in die äußerste Schicht der Reibflächen Wärme eingebracht die aufgrund des begrenzten Wärmeleitvermögens zunächst zu einem Wärmestau verbunden mit sehr hohen Temperaturen in dieser äußesten Schicht führt.

Als Folge der hohen Temperaturen will sich die äußerste Schicht ausdehnen. Diese wärmebedingte Ausdehnung wird jedoch unterdrückt, da das Basismaterial der Bremsscheibe noch nicht entsprechend erwärmt ist.

Die äußerste Schicht der Reibfläche kommt infolge der auftretenden hohen Druckspannungen ins Fließen. Bei der nach dem Bremsvorgang eintretenden Abkühlung der Bremsscheibenreibfläche wird jedoch das nun erfolgende Schrumpfen der äußersten Schicht der Reibfläche ebenfalls unterdrückt, so daß es nunmehr zu hohen Zugspannungen und zu einem Einreißen dieser äußersten Schicht der Reibfläche kommt. Diese Wärmerisse sind zunächst sehr fein ausgebildet. Durch wiederholte Beanspruchung in der beschriebenen Weise tritt jedoch ein Rißwachstum ein.

Durch die thermische Spritzschicht wird die Wärmerißbildung in der Weise beeinflußt, daß aufgrund der höheren Festigkeit des Beschichtungsmaterials gegenüber Grauguß das Fließen des Materials in der Aufheizphase während der Bremsung nicht so schnell eintritt und damit die hohen Zugspannungen in der Abkühlphase unterdrückt werden, wodurch in Verbindung mit der höheren Festigkeit des Beschichtungsmaterials die Rißbildung vermieden wird.

Rubbelprobleme bei Bremsscheiben werden durch Dickenschwankungen des Bremsscheibenreibringes hervorgerufen, die als Folge von Herstellungsfehlern oder als Folge von Betriebseinflüssen auftreten.

Eine derartige Folge von Betriebseinflüssen können Auswaschungen der Reibflächen sein die während der Fahrt, also im nicht gebremsten Zustand, durch periodisch gegen die Bremsscheibe schlagende Bremsbeläge hervorgerufen werden (Kaltrubbeln).

Diese Erscheinung läßt sich seitens der Bremsscheibe nur durch bestmögliche Verschleißfestigkeit hinsichtlich der beschriebenen Beanspruchung vermeiden. Diese erhöhte Verschleißfestigkeit wird durch die thermischen Spritzschichten erhielt, so daß damit auch eine Abhilfe gegen das Kaltrubbeln vorliegt.
Eine zweite Form des Rubbelns wird durch Gefügeveränderungen des Bremsscheibenmaterials unter Wärmeeinwirkung hervorgerufen. Hierbei wird örtlich z.T. als Folge von Reaktionen mit dem Bremsbelagmaterial ein Gefüge mit Hartstoffanteilen gebildet, welches auch eine Volumenvergrößerung gegenüber dem Grundgefüge aufweist, so daß diese umgewandelten Partien aus der Bremsscheibenreibfläche herauswachsen. Da diese Partien aufgrund des Hartstoffanteils auch weniger stark verschleißen als die nicht umgewandelten Bereiche der Reibfläche, wird dieses Herauswachsen mit zunehmendem Verschleiß der Bremsscheibe verstärkt und damit auch das in der Folge auftretende Bremsenrubbeln. Da für die thermischen Spritzschichten relativ inerte Materialien wie z.B. der beschriebene Chromstahl angewendet werden, können die beschriebenen Reibflächenveränderungen und damit auch das Heißrubbeln vermieden werden.

Ein vorteilhafter Beschichtungsprozeß - ein Lichtbogenspritzen - zur Herstellung einer erfindungsgemäßen Bremsscheibe wird nachfolgend näher beschrieben

Zunächst empfiehlt sich eine spanende Vorbehandlung des Rohgußkörpers z.B. durch Feindrehen auf ein Reibringdickenmaß, welches um den Betrag der gewünschten Beschichtungsdicke unter dem gewünschten Endmaß liegt.

Daraufhin empfiehlt sich ein Reinigen der Bremsscheibe von Bearbeitungsrückständen Empfehlenswert sind ein mechanisches Reinigen und ein Aufrauhen durch Bestrahlen mit feinem Korund oder einem Strahlgut mit vergleichbaren Eigenschaften. Vorzugsweise erfolgt nach dem Reinigen der Bremsscheibe von Bearbeitungsrückständen auch ein Aufrauhen der Oberfläche so wie vorzugsweise ein Beseitigen von Oxidationsschichten durch Partikelstrahlen.

### Beschichtung der Bremsscheibe:

Es werden vorzugsweise folgende Prozeßparameter verwendet:
Spritzdraht : Werkstoff Nr. 4122 ; Durchmesser 1.6 mm
Spritzbahnen : 5 Einzelbahnen mit 160mm/min Parallelvorschub
Werkstückdrehzahl : 60 Umdrehungen/min
Schichtstärke : ca. : 0,7mm
Spritzparameter : Stromstärke 300 A , Spannung 30 V
Zerstäubergas : 80qm/h Druckluft bei 5 bar
Drahtmenge pro Scheibe : ca. 0,8 kg
Beschichtungszeit : 3 min

Neben dem Lichtbogenspritzen sind auch das Flammspritzen und das Plasmaspritzen zum Beschichten von Bremsscheiben anwendbare Verfahren. Diese Verfahren sind im Anhang in Auszügen aus dem Fachbuch " Verschleißhemmende Schichten, Helmut Kunst und 7 Mitautoren, Band 436 Kontakt und Studium Werkstoffe, Expert Verlag" beschrieben.

Fertigbearbeitung der Bremsscheibe :
Da die Bremsscheibe nach der Beschichtung eine relativ rauhe Oberfläche aufweist ist eine Schlichtbearbeitung zum Glätten der Oberfläche erforderlich. Dies erfolgt vorzugsweise mechanisch durch Schleifen. Zur Vermeidung des Verlustes von Beschichtungsmaterial kann jedoch auch eine spanlose Endbearbeitung wie z.B. Glattwalzen angewendet werden. Zur Endbearbeitung ist ferner ein Feindrehen vorteilhaft.

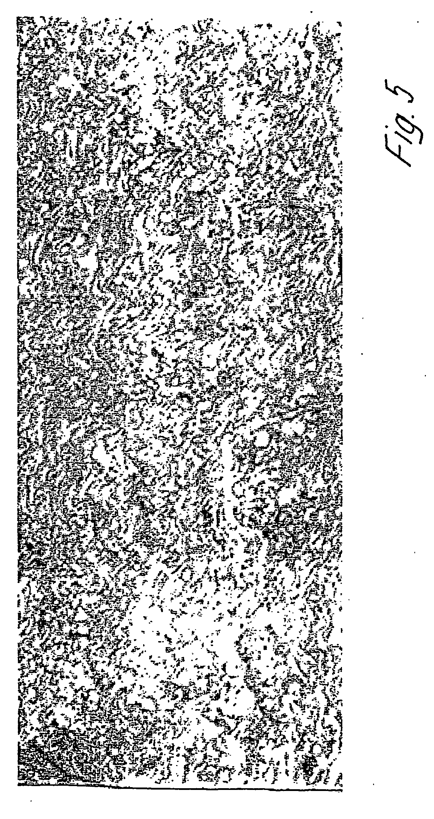

Figur 5 zeigt ein Schliffbild in Vergrößerung etwa 500 : 1. Das Schliffbild der Beschichtung macht die bestehenden Anforderungen an die Qualität der Ausführung der Schutzschicht deutlich. Wesentlich ist die Begrenzung der Porosität. Die dunklen Punkte entsprechen Poren, also Hohlstellen in der Schicht.

Vorzugsweise soll die Porosität nicht mehr als 5 Prozent betragen, d.h. der Anteil der dunklen Stellen im Schliffbild sollte nicht größer als 5 Prozent sein.

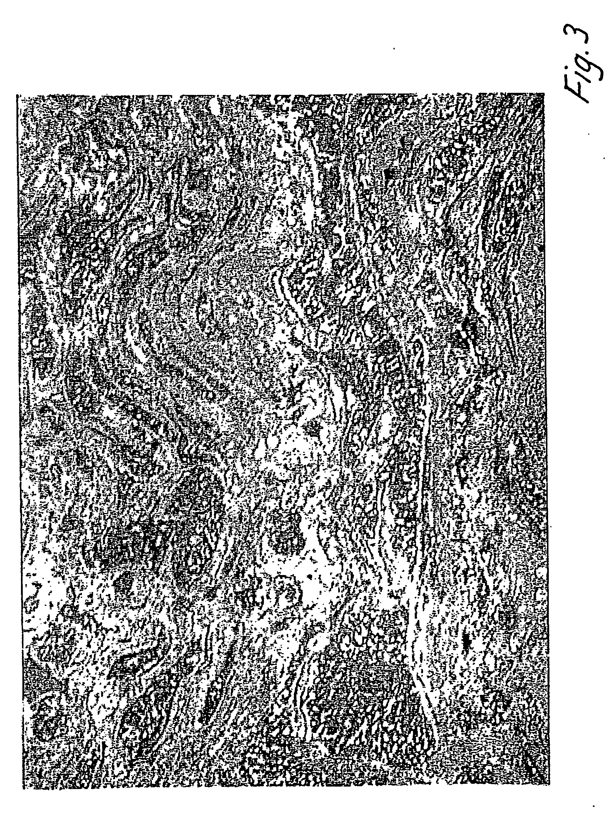

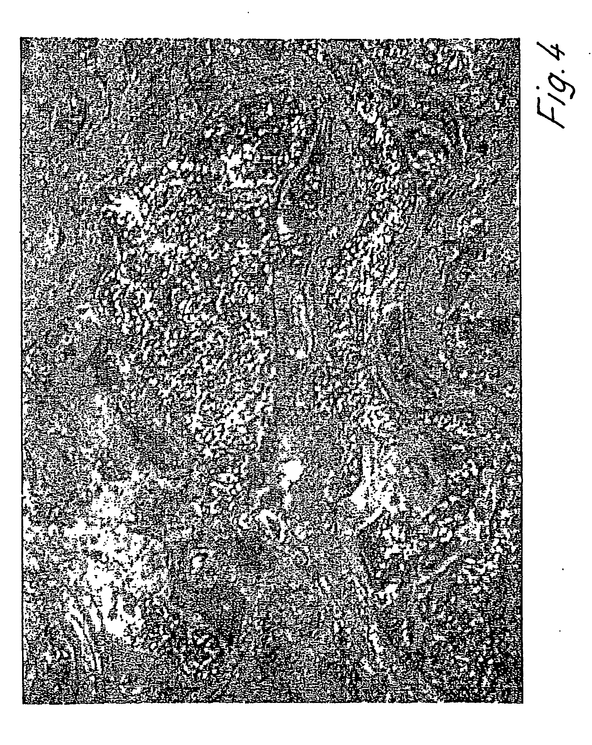

Figur 3 und 4 zeigen anhand einer Vergrößerung von 1.000 : 1 die Bildung und Verteilung der die Verschleißfestigkeit steigernden Hartstoffe, welche durch Ätzen als helle Flecken kenntlich gemacht sind.

Die hellen Flecken stellen Carbide dar, welche im wesentlichen aus Chromcarbiden bestehen. Es können jedoch auch Carbide ausgebildet sein, die aus anderen Legierungsbetandteilen entstanden sind sowie Metalloxide, welche ebenfalls positive Auswirkungen auf die Härte und Verschleißfestigkeit der Beschichtung haben.

Die Härte der Beschichtung soll 350 bis 500 HV1 betragen. Es sollten fein verteilt Carbide und Oxide im Gefüge vorhanden sein, welche in Größe, Verteilung und Häufigkeit vorzugsweise in der Art den beigefügten Schliffbildern entsprechen sollten. In einem geätzten Schliffbild auf einem Querschnitt durch die Beschichtung bzw. die Schichtstruktur sollten mindestens 5 Prozent der Fläche des Schliffbildes, vorzugsweise jedoch 10 bis 20 Prozent der Fläche durch das Vorhandensein von fein verteilten Carbiden und Oxiden als helle Streifen erscheinen, um eine besonders verschleißresistente und wirkungsvolle Beschichtung auszubilden.

### Bezugszeichen

- Bremsscheibe: 1
- Reibringe: 2, 3
- Stege: 4
- Lüftkanal: 5
- Ansatz: 6
- Kern: 7
- Spritzgußbeschichtung: 8
- Bund: 9
- Nuten: 10

## Patentansprüche

1. Bremsscheibe für Landfahrzeuge mit axialen Reibflächen, insbesondere innenbelüftete Bremsscheibe (1) mit zwei über Stege (4) verbundenen Reibringen (2, 3), wobei die Bremsscheibe (1) einen scheibenartigen Kern (7) aus einem Eisengußwerkstoff aufweist, der zumindest an einer seiner axialen Reibflächen mit einer Beschichtung (8) versehen ist, **dadurch gekennzeichnet, daß** die Beschichtung als metallische, nichtkeramische Spritzgußbeschichtung (8) oder Explosionsbeschichtung ausgebildet ist, die aus einem härteren Metall als der Kern besteht, wobei Karbide und Oxide im Gefüge der Beschichtung vorhanden sind, die derart in der Bremsbeschichtung ausgebildet sind, daß in einem geätzten Schliffbild auf einem Querschnitt durch die Schichtstruktur mindestens fünf Prozent der Fläche des Schliffbildes durch das Vorhandensein von fein verteilten Karbiden und Oxiden als helle Stellen erscheinen.

2. Bremsscheibe nach Anspruch 1, **dadurch gekennzeichnet, daß** die Spritzgußbeschichtung (8) als Flamm-, Lichtbogen- oder Plasmaspritzgußbeschichtung ausgebildet ist.

3. Bremsscheibe nach einem der vorstehenden Ansprüche, **dadurch gekennzeichnet, daß** die Spritzgußbeschichtung (8) oxidationsresistenter und verschleißresistenter als der Kern (7) ausgebildet ist.

4. Bremsscheibe nach einem der vorstehenden Ansprüche, **dadurch gekennzeichnet, daß** die Beschichtung (8) aus einem unlegierten oder legierten Stahl besteht.

5. Bremsscheibe nach einem der vorstehenden Ansprüche, **dadurch gekennzeichnet, daß** die Beschichtung (8) aus einer Cr enthaltenden Stahllegierung besteht.

6. Bremsscheibe nach einem der vorstehenden Ansprüche, **dadurch gekennzeichnet, daß** der Cr-Gehalt der Beschichtung (8) zwischen 10 und 20% liegt.

7. Bremsscheibe nach einem der vorstehenden Ansprüche, **dadurch gekennzeichnet, daß** der Cr-Gehalt der Beschichtung (8) zwischen 13 und 19 % liegt.

8. Bremsscheibe nach einem der vorstehenden Ansprüche, **dadurch gekennzeichnet, daß** der Cr-Gehalt der Beschichtung (8) zwischen 15 und 17% liegt.

9. Bremsscheibe nach einem der vorstehenden Ansprüche, **dadurch gekennzeichnet, daß** der Cr-Gehalt der Beschichtung (8) bei 16% liegt.

10. Bremsscheibe nach einem der vorstehenden Ansprüche, **dadurch gekennzeichnet, daß** der die Beschichtung (8) bildende legierte Stahl folgende Zusätze enthält:
16%Cr ,
0,44%Ni ,
0,43 %Mn ,
1,01 %Mo , und
0,36%C .

11. Bremsscheibe nach einem der vorstehenden Ansprüche, **dadurch gekennzeichnet, daß** der Kern (7) aus einem Grauguß besteht.

12. Bremsscheibe nach einem der vorstehenden Ansprüche, **dadurch gekennzeichnet, daß** der den Kern (7) bildende Grauguß ein hochgekohlter Grauguß ist, der einen Kohlenstoffgehalt von 3,7 - 4,0 % aufweist,

13. Bremsscheibe nach einem der vorstehenden Ansprüche, **dadurch gekennzeichnet, daß** der den Kern (7) bildende Grauguß Mo und/oder Cr enthält.

14. Bremsscheibe nach einem der vorstehenden Ansprüche, **dadurch gekennzeichnet, daß** der Mo-Gehalt des Kernes bei 0,6-0,8% und der Cr-Gehalt bei weniger als 0,5% liegt.

15. Bremsscheibe nach einem der vorstehenden Ansprüche, **dadurch gekennzeichnet, daß** die Reibringe (2, 3) am inneren und/oder äußeren Umfangsrand mindestens einen axialen Bund (9) aufweisen, dessen Höhe vorzugsweise der axialen Erstreckung der Beschichtung (8) entspricht.

16. Bremsscheibe nach einem der vorstehenden Ansprüche, **dadurch gekennzeichnet, daß** die Beschichtung (8) eine axiale Erstreckung von 0,3 bis 1, 5 mm aufweist.

17. Bremsscheibe nach einem der vorstehenden Ansprüche, **dadurch gekennzeichnet, daß** die Beschichtung (8) eine axiale Erstreckung von 0, 5 - 1, 2 mm aufweist.

18. Bremsscheibe nach einem der vorstehenden Ansprüche, **dadurch gekennzeichnet, daß** die Beschichtung (8) eine axiale Erstreckung von 0, 6 - 0, 9 mm aufweist.

19. Bremsscheibe nach einem der vorstehenden Ansprüche, **dadurch gekennzeichnet, daß** die Beschichtung (8) eine axiale Erstreckung von 0, 7 mm aufweist.

20. Bremsscheibe nach einem der vorstehenden Ansprüche, **dadurch gekennzeichnet, daß** die Scheibendicke 38 bis 45mm und die Luftkanalbreite 12 mm beträgt.

21. Bremsscheibe nach einem der vorstehenden Ansprüche, **dadurch gekennzeichnet, daß** das Verhältnis zwischen Scheibendicke D 1 und Luftkanalbreite D die Bedingung 3,2<= D1/D2 <= 4 erfüllt.

22. Bremsscheibe nach einem der vorstehenden Ansprüche, **dadurch gekennzeichnet, daß** im Übergangsbereich zwischen dem Kern (7) und der Spritzgußbeten (10) und/oder eine Noppenstruktur ausgebildet ist.

23. Bremsscheibe nach einem der vorstehenden Ansprüche, **dadurch gekennzeichnet, daß** in der Beschichtung (8) Chromcarbide ausgebildet sind.

24. Bremsscheibe nach Anspruch 23, **dadurch gekennzeichnet, daß** die Porosität der Beschichtung (8) weniger als weniger als 5 Prozent beträgt.

25. Bremsscheibe nach einem der vorstehenden Ansprüche, **dadurch gekennzeichnet, daß** die Härte der Beschichtung (8) 350 bis 500 HV1 beträgt.

26. Bremsscheibe nach einem der vorstehenden Ansprüche, **dadurch gekennzeichnet, daß** Carbide und Oxide, vorzugsweise fein verteilt, im Gefüge vorhanden sind.

27. Verfahren zur Herstellung einer Bremsscheibe nach einem der vorstehenden Ansprüche, **dadurch gekennzeichnet, daß** bei welchem der Bremsscheibenkörper aus einem Eisengußwerkstoff abschnittsweise oder wenigstens einer seiner axialen Außenflächen mit einer metallischen, nichtkeramischen Beschichtung versehen wird, die im Flamm-, Lichtbogen- oder Plasmaspritzgußbeschichtungsverfahren oder im Explosionsbeschichtungsverfahren aufgebracht wird, **gekennzeichnet durch** folgende Schritte:
- spanende Vorbehandlung des Rohgußkörpers,
- Reinigen der Bremsscheibe von Bearbeitungsrückständen,
- vorzugsweise aufrauhende Oberfläche und/oder Beseitigung von Oxidationsschichten **durch** Partikelstrahlen,
- Beschichtung der Bremsscheibe, und
- Schlichtbearbeitung zum Glätten der Oberfläche und/oder Feindrehen.

## Claims

1. Brake disc for land vehicles, comprising axial friction surfaces, in particular internally vented brake disc (1) with two friction rings (2, 3) connected to each other via webs (4), with the brake disc (1) comprising a disc-like core (7) made of a cast iron material provided with a coating (8) at least on one of its axial friction surfaces, **characterised in that** said coating is designed as metallic non-ceramic injection-moulded coating (8) or explosion coating that consists of a metal harder than the metal of said core, wherein carbides and oxides are present in the structure of said coating which are so structured in said brake coating that in an etched micrograph on a cross-section through the layered structure, at least five percent of the surface of the micrograph appear as light-coloured areas due to the presence of finely dispersed carbides and oxides.

2. Brake disc according to Claim 1, **characterised in that** said injection-moulded coating (8) is configured as coating injection-moulded by flame, by electric-arc or plasma injection.

3. Brake disc according to any of the preceding Claims, **characterised in that** said injection-moulded coating (8) is configured such that it is more resistant to oxidation and to wear than said core (7).

4. Brake disc according to any of the preceding Claims, **characterised in that** said coating (8) consists of non-alloyed or alloyed steel.

5. Brake disc according to any of the preceding Claims, **characterised in that** said coating (8) consists of a Cr-containing steel alloy.

6. Brake disc according to any of the preceding Claims, **characterised in that** the Cr-level in said coating (8) ranges between 10 % and 20 %.

7. Brake disc according to any of the preceding Claims, **characterised in that** the Cr-level in said coating (8) ranges between 13 % and 19 %.

8. Brake disc according to any of the preceding Claims, **characterised in that** the Cr-level in said coating (8) ranges between 15 % and 17 %.

9. Brake disc according to any of the preceding Claims, **characterised in that** the Cr-level in said coating (8) ranges at 16 %.

10. Brake disc according to any of the preceding Claims, **characterised in that** the alloyed steel constituting said coating (8) contains the following additives:
16%Cr,
0.44 % Ni,
0.43 % Mn,
1.01 % Mo, and
0.36 % C.

11. Brake disc according to any of the preceding Claims, **characterised in that** said core (7) consists of a grey cast iron material.

12. Brake disc according to any of the preceding Claims, **characterised in that** said grey cast iron material constituting said core (7) is a high-carbon grey cast iron displaying a carbon content of 3.7 % to 4.0 %.

13. Brake disc according to any of the preceding Claims, **characterised in that** said grey cast iron material constituting said core (7) contains Mo and/or Cr.

14. Brake disc according to any of the preceding Claims, **characterised in that** the Mo level in said core ranges at 0.6 % to 0.8 % and the Cr level ranges at less than 0.5 %.

15. Brake disc according to any of the preceding Claims, **characterised in that** said friction rings (2, 3) present at least one axial collar (9) on the inner and/or outer peripheral edge(s) having a height preferably corresponding to the axial extension of said coating (8).

16. Brake disc according to any of the preceding Claims, **characterised in that** said coating (8) presents an axial extension of 0.3 mm to 1.5 mm.

17. Brake disc according to any of the preceding Claims, **characterised in that** said coating (8) presents an axial extension of 0.5 mm to 1.2 mm.

18. Brake disc according to any of the preceding Claims, **characterised in that** said coating (8) presents an axial extension of 0.6 mm to 0.9 mm.

19. Brake disc according to any of the preceding Claims, **characterised in that** said coating (8) presents an axial extension of 0.7 mm.

20. Brake disc according to any of the preceding Claims, **characterised in that** the thickness of the disc amounts to 38 mm to 45 mm whilst the width of the air passage amounts to 12 mm.

21. Brake disc according to any of the preceding Claims, **characterised in that** the ratio between the thickness of the disc D1 and the width D of the air passage satisfies the relationship 3.2 <= D1/D2 <= 4.

22. Brake disc according to any of the preceding Claims, **characterised in that** contours mutually engaged in each other, preferably grooves (10) and/or a nub structure, are configured in the transitional zone between said core (7) and said injection-moulded coating (8).

23. Brake disc according to any of the preceding Claims, **characterised in that** chromium carbides are formed in said coating (8).

24. Brake disc according to Claim 23, **characterised in that** the porosity of said coating (8) is less than 5 percent.

25. Brake disc according to any of the preceding Claims, **characterised in that** the hardness of said coating (8) amounts to 350 to 500 HV1.

26. Brake disc according to any of the preceding Claims, **characterised in that** carbides and oxides are present in the structure, preferably in a finely distributed form.

27. Method of manufacturing a brake disc according to any of the preceding Claims, **characterised in that** the brake disc body made of a cast iron material is provided with a metallic, non-ceramic coating either in defined sections or at least on one of its axial exterior surfaces, which is applied by a flame-moulding, an electric-arc or plasma injection-moulding technique or by an explosion coating technique, **characterised by** the following steps:
- machining pre-treatment of the raw cast body,
- cleaning of the brake disc with removal of processing residues,
- preferably roughening of the surface and/or elimination of oxidation layers by particle blasting,
- coating of the brake disc, and
- finishing treatment for smoothening the surface and/or precision turning.

## Revendications

1. Disque de frein pour véhicules routiers, comprenant des surfaces de frottement axiales, en particulier un disque de frein (1) aéré à l'intérieur, à deux anneaux de friction (2, 3) reliés l'un à l'autre via des brides (4), au disque de frein (1) comprenant un noyau en forme de disque (7) fait en un made of a matériau en fonte de fer, pourvu d'un revêtement (8) à au moins un des ses surfaces de frottement axiales, **caractérisé en ce que** ledit revêtement est conçu sous forme d'un revêtement moulé par injection métallique non céramique (8) ou d'un revêtement appliqué par explosion, qui consiste en un métal plus dur que le métal dudit noyau, dans lequel des carbures et des oxydes sont présents dans la structure dudit revêtement, qui sont structurés dans ledit revêtement de frein d'une telle manière, que, dans une micrographie décapée sur une section transversale à travers la structure stratifiée, au moins cinq pour cents de la surface de la micrographie apparaissent en tant que des aires claires en vertu de la présence de carbures et oxydes finement distribués.

2. Disque de frein selon la revendication 1, **caractérisé en ce que** ledit revêtement moulé par injection (8) est configuré en tant que revêtement moulé par injection à la flamme, à l'arc ou à plasma.

3. Disque de frein selon une quelconque des revendications précédentes, **caractérisé en ce que** ledit revêtement moulé par injection (8) est configuré d'une telle manière, qu'il soit plus résistant à l'oxydation et à l'usure que ledit noyau (7).

4. Disque de frein selon une quelconque des revendications précédentes, **caractérisé en ce que** ledit revêtement (8) consiste en acier non allié ou allié.

5. Disque de frein selon une quelconque des revendications précédentes, **caractérisé en ce que** ledit revêtement (8) consiste en un acier allié contentant de Cr.

6. Disque de frein selon une quelconque des revendications précédentes, **caractérisé en ce que** la teneur en Cr dans ledit revêtement (8) a une valeur entre 10 % et 20 %.

7. Disque de frein selon une quelconque des revendications précédentes, **caractérisé en ce que** la teneur en Cr dans ledit revêtement (8) a une valeur entre 13 % et 19 %.

8. Disque de frein selon une quelconque des revendications précédentes, **caractérisé en ce que** la teneur en Cr dans ledit revêtement (8) a une valeur entre 15 % et 17 %.

9. Disque de frein selon une quelconque des revendications précédentes, **caractérisé en ce que** la teneur en Cr dans ledit revêtement (8) a une valeur de 16 %.

10. Disque de frein selon une quelconque des revendications précédentes, **caractérisé en ce que** l'acier allié constituant ledit revêtement (8) contient les additions suivantes :
16%Cr,
0,44 % Ni,
0,43 % Mn,
1,01 % Mo, et
0,36 % C.

11. Disque de frein selon une quelconque des revendications précédentes, **caractérisé en ce que** ledit noyau (7) consiste en un matériau en fonte grise.

12. Disque de frein selon une quelconque des revendications précédentes, **caractérisé en ce que** ledit matériau en fonte grise, qui constitue ledit noyau (7), est une fonte de fer grise à une haute teneur de carbone, qui présente une teneur en carbone de 3,7 % à 4,0 %.

13. Disque de frein selon une quelconque des revendications précédentes, **caractérisé en ce que** ledit matériau en fonte grise, qui constitue ledit noyau (7), contient Mo et/ou Cr.

14. Disque de frein selon une quelconque des revendications précédentes, **caractérisé en ce que** la teneur en Mo dans ledit noyau a une valeur de 0,6 % à 0,8 % et la teneur en Cr a une valeur de moins que 0,5 %.

15. Disque de frein selon une quelconque des revendications précédentes, **caractérisé en ce que** lesdits anneaux de friction (2, 3) présentent, au moins, un collet axial (9) à ses bords périphériques intérieurs et/ou extérieurs ayant une hauteur, qui corresponde à l'étendue axiale dudit revêtement (8).

16. Disque de frein selon une quelconque des revendications précédentes, **caractérisé en ce que** ledit revêtement (8) présente une étendue axiale de 0,3 mm à 1,5 mm.

17. Disque de frein selon une quelconque des revendications précédentes, **caractérisé en ce que** ledit revêtement (8) présente une étendue axiale de 0,5 mm à 1,2 mm.

18. Disque de frein selon une quelconque des revendications précédentes, **caractérisé en ce que** ledit revêtement (8) présente une étendue axiale de 0,6 m à 0,9 mm.

19. Disque de frein selon une quelconque des revendications précédentes, **caractérisé en ce que** ledit revêtement (8) présente une étendue axiale de 0,7 mm.

20. Disque de frein selon une quelconque des revendications précédentes, **caractérisé en ce que** l'épaisseur du disque se monte à 38 mm à 45 mm, pendant que la largeur du passage d'air correspond à 12 mm.

21. Disque de frein selon une quelconque des revendications précédentes, **caractérisé en ce que** le rapport entre l'épaisseur du disque D1 et la largeur D du passage d'air correspond à la corrélation 3.2 <= D1/D2 <= 4.

22. Disque de frein selon une quelconque des revendications précédentes, **caractérisé en ce que** des contours en prise l'un dans l'autre, de préférence des rainures (10) et/ou une structure à nopes, sont configurés dans la zone de transition entre ledit noyau (7) et ledit revêtement moulé par injection (8).

23. Disque de frein selon une quelconque des revendications précédentes, **caractérisé en ce que** des carbures de chrome sont formés dans ledit revêtement (8).

24. Disque de frein selon la revendication 23, **caractérisé en ce que** la porosité dudit revêtement (8) est moins de 5 pour cent.

25. Disque de frein selon une quelconque des revendications précédentes, **caractérisé en ce que** la dureté dudit revêtement (8) correspond à 350 à 500 HV1.

26. Disque de frein selon une quelconque des revendications précédentes, **caractérisé en ce que** des carbures et des oxydes sont présents dans la structure, de préférence en une distribution fine.

27. Procédé à fabriquer un disque de frein selon une quelconque des revendications précédentes, **caractérisé en ce que** le corps du disque de frein, fait en un matériau en fonte de fer, est pourvu d'un revêtement métallique non céramique, soit en segments définis ou au moins à une de des surfaces axiales extérieures, qui est moulé par injection par une technique à flamme, à arc ou à plasma ou par revêtement à explosion, **caractérisé par** les étapes suivantes :
- traitement initial du corps coulé brut par usinage,
- nettoyage du disque de frein en enlevant les résidus du traitement,
- de préférence, grenaillage de la surface et/ou élimination des couches d'oxydation par nettoyage aux particules,
- revêtement du disque de frein, et
- traitement de finissage afin de lisser la surface et/ou tournage de précision.
